# EUROPEAN PATENT APPLICATION

(11) **EP 1 158 724 A2**
(43) Date of publication of application: **28.11.2001**
(21) Application number: 01112005.2
(22) Date of filing: 23.05.2001
(51) Int. Cl.: H04L 12/56

(54) **Packet processor with programmable application logic**

(30) Priority: 24.05.2000 US 206617 P; 24.05.2000 US 206996 P; 24.07.2000 US 220335 P
(71) Applicant: Alcatel Internetworking (PE), Inc., Spokane, Washington 99206 (US)
(72) Inventor: Clear, David, San Jose, CA 95123 (US); Michels, Timothy S., Gilroy, CA 95020 (US); Davis, Greg W., Spokane, WA 99206 (US); Tallegas, Mathieu, Verdale, WA 99037 (US); Ganesh, Sundara, Verdale, WA 99037 (US)
(74) Representative: Dreiss, Fuhlendorf, Steimle & Becker

(57) **Abstract**

A data communication switch includes a backplane and multiple packet switching controllers. At least one packet switching controller includes programmable application logic for generating application data for a packet. The application logic is contained in key builder and lookup table of an application engine. The key builder contains one or more schema programs for generating keys and key controls using classification information and header data of inbound packets. The schema programs can be loaded onto the key builder during fabrication of the packet switching controller or in field. The keys and key controls are used to lookup the application data from the lookup table.

## Description

### CROSS-REFERENCE TO RELATED APPLICATIONS

The present application claims the priority of U.S. Provisional Application No. 60/206,617 entitled "System and Method for Enhanced Line Cards" filed May 24, 2000, U.S. Provisional Application No. 60/206,996 entitled "Flow Resolution Logic System and Method" filed May 24, 2000 and U.S. Provisional Application No. 60/220,335 entitled "Programmable Packet Processor" filed July 24, 2000, the contents of all of which are fully incorporated by reference herein. The present application contains subject matter related to the subject matter disclosed in U.S. Patent Application No. 09/679,138 entitled "Tuple-Based Lookup Scheme for Packet Switching Node" filed October 3, 2000 and U.S. Patent Application (Attorney Docket No. 40029/JEJ/X2/134021) entitled "Programmable Packet Processor with Flow Resolution Logic" filed December 28, 2000, the contents of both of which are fully incorporated by reference herein.

### BACKGROUND OF THE INVENTION

Many conventional packet switching controllers rely on fixed, i.e. non-programmable, logic to make the lion's share of packet decisions. Programmable logic has been relied on, if at all, to make decisions for "exceptional" packets. Such "hardwired" controllers, which make fixed logic the bulwark of decision-making and relegate programmable logic to at most a collateral role, have generally supported relatively high forwarding speeds but also a severely limited feature set. Feature limitations have been imposed by the general requirement of including discrete fixed logic for each application the controller is expected to support. This general requirement of application-specific fixed logic has limited the number of applications the controller can support and has made it difficult to "field upgrade" the controller to add application support. Instead, new application support has typically required a hardware upgrade.

Due to the relative inflexibility of hardwired switching controllers, controllers reliant on programmable logic for routine packet decision-making (particularly controllers having multiple programmable processors) have been given more attention in recent years. Such multiprocessor controllers, sometimes called "network processors", can typically support a variety of applications and are typically more amenable to field upgrades due to their programmable nature.

The simultaneous multi-application support provided by network processors makes it desirable for application logic to effectuate distinct applications in response to different packet conditions. Therefore, it is desirable to provide an efficient application logic for a network processor that can provide different application data to different packet conditions or types.

### SUMMARY

In one embodiment of the present invention, a packet processing element is provided. The packet processing element has a plurality of schemata programmed thereon. Classification information for the packet is used to select at least one schema, and the selected schema is used to produce application data for the packet.

In another embodiment of the present invention, a method of producing application data for a packet is provided. The method uses a packet processing element having a plurality of schemata programmed thereon. At least one schema is selected using classification information for the packet, and the application data for the packet is produced using the selected schema.

In yet another embodiment of the present invention, a packet switching controller is provided. The packet switching controller includes a processing engine. The processing engine includes an element for building a key using classification information for a packet and a lookup table containing one or more schemata. The key is used to select one of the schemata for the packet, and the selected schema provides application data for the packet.

In still another embodiment of the present invention, a method of producing application data for a packet is provided. A key is built using classification information for the packet. Then a schema is selected for the packet from a lookup table containing one or more schemata. The application data is read from the selected schema.

In a further embodiment of the present invention, a data communication switch having a backplane and a plurality of packet switching controllers interconnected over the backplane is provided. At least one packet switching controller includes an application engine having a plurality of schemata programmed thereon.

### BRIEF DESCRIPTION OF THE DRAWINGS

These and other aspects of the invention may be understood by reference to the following detailed description, taken in conjunction with the accompanying drawings, which are briefly described below.
FIG. 1 illustrates a network environment including a packet switching node in which one embodiment of the present invention is used;
FIG. 2 is a block diagram of a switching interface in one embodiment of the present invention;
FIG. 3 is a block diagram of a programmable packet switching controller in one embodiment of the present invention;
FIG. 4 is a block diagram of an application engine of a programmable packet switching controller in one embodiment of the present invention;
FIG. 5 is a schema table contained in a lookup table of an application engine in one embodiment of the present invention; and

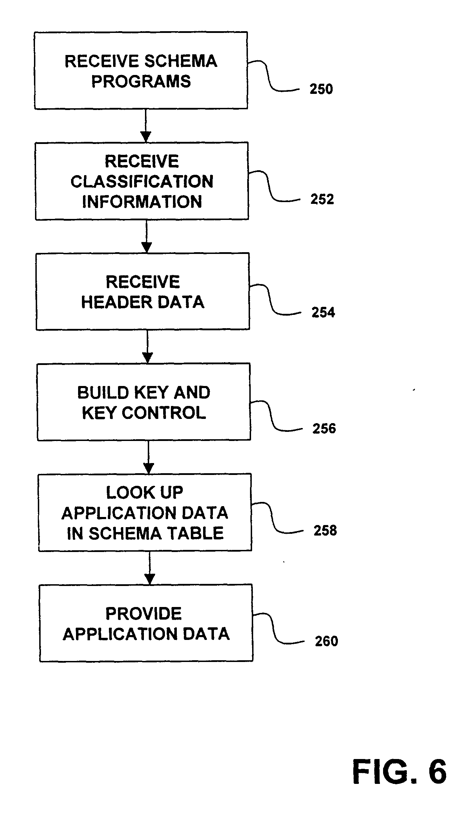

FIG. 6 is a flow diagram illustrating a process of identifying application data in one embodiment of the present invention.

### DETAILED DESCRIPTION

### I. Overview

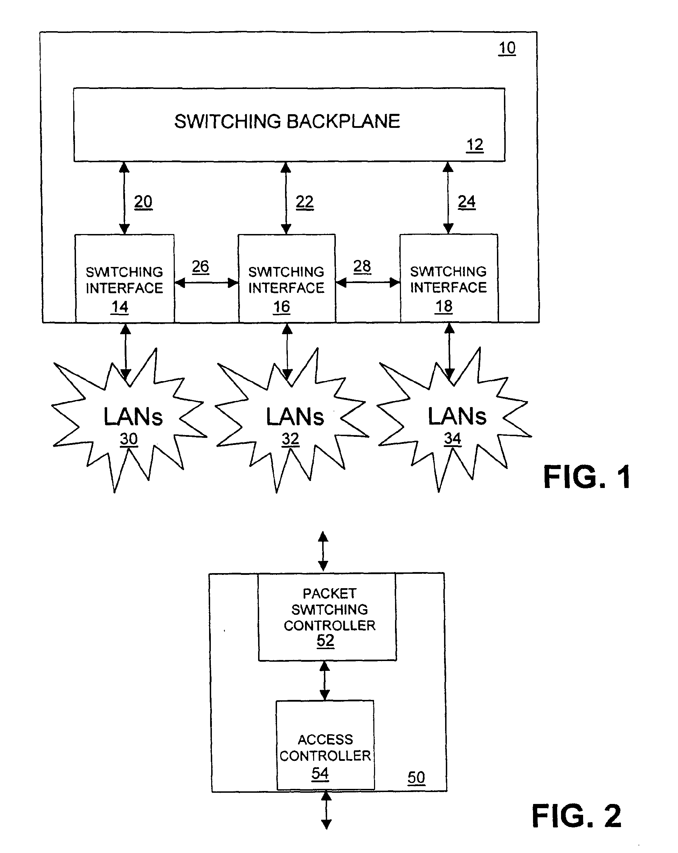

In FIG. 1, network environment including a packet switching node 10 is illustrated. The packet switching node may also be referred to as a switch, a data communication node or a data communication switch. The packet switching node 10 includes switching interfaces 14, 16 and 18 interconnected to respective groups of LANs 30, 32, 34, and interconnected to one another over data paths 20, 22, 24 via switching backplane 12. The switching backplane 12 preferably includes switching fabric. The switching interfaces may also be coupled to one another over control paths 26 and 28.

The switching interfaces 14, 16, 18 preferably forward packets to and from their respective groups of LANs 30, 32, 34 in accordance with one or more operative communication protocols, such as, for example, media access control (MAC) bridging and Internet Protocol (IP) routing. The switching node 10 is shown for illustrative purposes only. In practice, packet switching nodes may include more or less than three switching interfaces.

FIG. 2 is a block diagram of a switching interface 50 in one embodiment of the present invention. The switching interface 50 may be similar, for example, to the switching interfaces 14, 16, 18 of FIG. 1. The switching interface 50 includes an access controller 54 coupled between LANs and a packet switching controller 52. The access controller 54, which may, for example, include a media access controller (MAC), preferably receives inbound packets off LANs, performs flow-independent physical and MAC layer operations on the inbound packets and transmits the inbound packets to the packet switching controller 52 for flow-dependent processing. The access controller 54 preferably also receives outbound packets from the packet switching controller 52 and transmits the packets on LANs. The access controller 54 may also perform physical and MAC layer operations on the outbound packets prior to transmitting them on LANs.

The packet switching controller 52 preferably is programmable for handling packets having wide variety of communications protocols. The packet switching controller 52 preferably receives inbound packets, classifies the packets, modifies the packets in accordance with flow information and transmits the modified packets on switching backplane, such as the switching backplane 12 of FIG. 1. The packet switching controller 52 preferably also receives packets modified by other packet switching controllers via the switching backplane and transmits them to the access controller 54 for forwarding on LANs. The packet switching controller 52 may also subject selected ones of the packets to egress processing prior to transmitting them to the access controller 54 for forwarding on LANs.

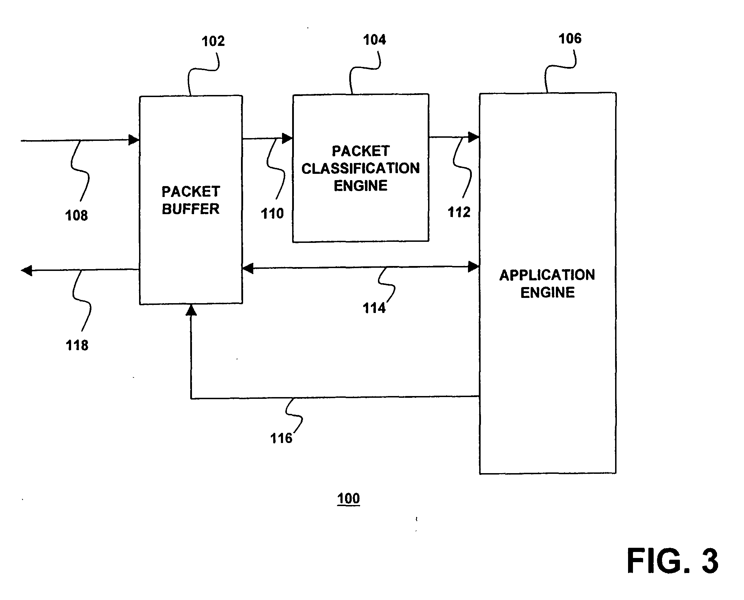

FIG. 3 is a block diagram of a programmable packet switching controller 100 in one embodiment of the present invention. The programmable packet switching controller 100, for example, may be similar to the packet switching controller 52 of FIG. 2. The programmable packet switching controller 100 preferably has flow resolution logic for classifying and routing incoming flows of packets. Packet switching controllers in other embodiments may include more or less components. For example, a packet switching controller in another embodiment may include a pattern match module for comparing packet portions against a predetermined pattern to look for a match. The packet switching controller in yet another embodiment may include an edit module for editing inbound packets to generate outbound packets. Further, packet switching controllers in still other embodiments may include other components, such as, for example, a policing engine, in addition to or instead of the components included in the programmable packet switching controller 100.

Due to its programmable nature, the programmable packet switching controller preferably provides flexibility in handling many different protocols and/or field upgradeability. The programmable packet switching controller may also be referred to as a packet switching controller, a switching controller, a programmable packet processor, a network processor, a communications processor or as another designation commonly used by those skilled in the art.

The programmable packet switching controller 100 includes a packet buffer 102, a packet classification engine 104, and an application engine 106. The programmable packet switching controller 100 preferably receives inbound packets 108. The packets may include, but are not limited to, Ethernet frames, ATM cells, TCP/IP and/or UDP/IP packets, and may also include other Layer 2 (Data Link/MAC Layer), Layer 3 (Network Layer) or Layer 4 (Transport Layer) data units. For example, the packet buffer 102 may receive inbound packets from one or more Media Access Control (MAC) Layer interfaces over the Ethernet.

The received packets preferably are stored in the packet buffer 102. The packet buffer 102 may include a packet FIFO for receiving and temporarily storing the packets. The packet buffer 102 preferably provides the stored packets or portions thereof to the packet classification engine 104 and the application engine 106 for processing.

The packet buffer 102 may also include an edit module for editing the packets prior to forwarding them out of the switching controller as outbound packets 118. The edit module may include an edit program construction engine for creating edit programs real-time and/or an edit engine for modifying the packets. The application engine 106 preferably provides application data 116, which may include a disposition decision for the packet, to the packet buffer 102, and the edit program construction engine preferably uses the application data to create the edit programs. The outbound packets 118 may be transmitted over a switching fabric interface to communication networks, such as, for example, the Ethernet.

The packet buffer 102 may also include either or both a header data extractor and a header data cache. The header data extractor preferably is used to extract one or more fields from the packets, and to store the extracted fields in the header data cache as extracted header data. The extracted header data may include, but are not limited to, some or all of the packet header. In an Ethernet system, for example, the header data cache may also store first N bytes of each frame.

The extracted header data preferably is provided in an output signal 110 to the packet classification engine 104 for processing. The application engine may also request and receive the extracted header data over an interface 114. The extracted header data may include, but are not limited to, one or more of Layer 2 MAC addresses, 802.1P/Q tag status, Layer 2 encapsulation type, Layer 3 protocol type, Layer 3 addresses, ToS (type of service) values and Layer 4 port numbers. In other embodiments, the output signal 110 may include the whole inbound packet, instead of or in addition to the extracted header data. In still other embodiments, the packet classification engine 104 may be used to edit the extracted header data to be placed in a format suitable for use by the application engine, and/or to load data into the header data cache.

The packet classification engine 104 preferably includes a programmable microcode-driven embedded processing engine. The packet classification engine 104 preferably is coupled to an instruction RAM (IRAM) (not shown). The packet classification engine preferably reads and executes instructions stored in the IRAM. In one embodiment, many of the instructions executed by the packet classification engine are conditional jumps. In this embodiment, the classification logic includes a decision tree with leaves at the end points that preferably indicate different types of packet classifications. Further, branches of the decision tree preferably are selected based on comparisons between the conditions of the instructions and the header fields stored in the header data cache. In other embodiments, the classification logic may not be based on a decision tree.

In one embodiment of the present invention, the application engine 106 preferably has a pipelined architecture wherein multiple programmable sub-engines are pipelined in series. Each programmable sub-engine preferably performs an action on the packet, and preferably forwards the packet to the next programmable sub-engine in a "bucket brigade" fashion. The packet classification engine preferably starts the pipelined packet processing by starting the first programmable sub-engine in the application engine using a start signal 112. The start signal 112 may include identification of one or more programs to be executed in the application engine 106. The start signal 112 may also include packet classification information. The programmable sub-engines in the application engine preferably have direct access to the header data and the extracted fields stored in the header data cache over the interface 114.

The application engine may include other processing stages not performed by the programmable sub-engines, however, the decision-making stages preferably are performed by the programmable sub-engines to increase flexibility. In other embodiments, the application engine may include other processing architectures. In still other embodiments, the application engine may use a tuple-based lookup scheme to identify application data, such as, for example, the scheme used in U.S. Patent Application No. 09/679,138 entitled "Tuple-Based Lookup Scheme for Packet Switching Node."

### II. Programmable Application Logic

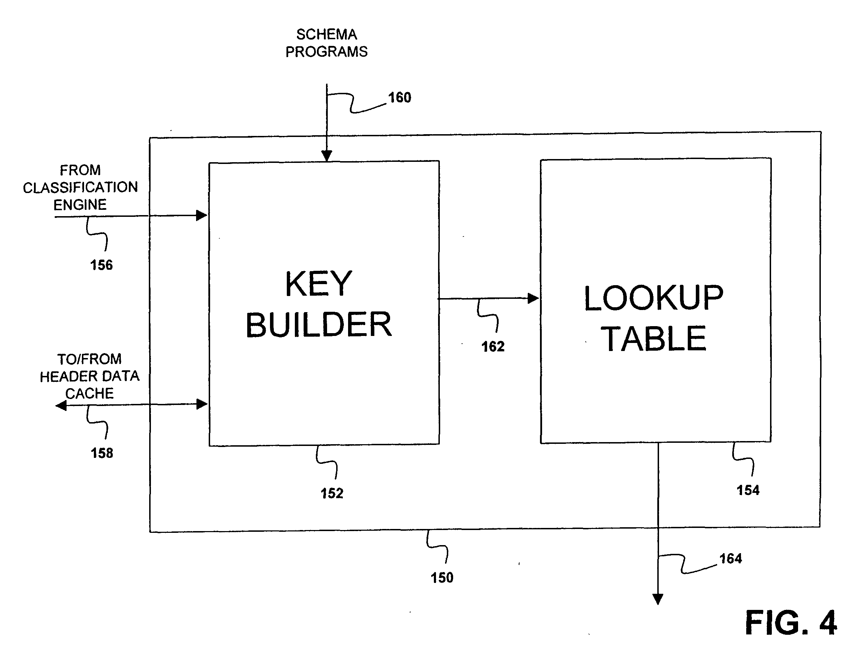

FIG. 4 is a block diagram of an application engine 150 in a programmable packet switching controller in one embodiment of the present invention. The application engine 150, for example, may be similar to the application engine 106 of FIG. 3. The application engine 150 includes a key builder 152 and a lookup table 154.

The key builder 152 preferably receives packet classification information 156 from a packet classification engine, such as, for example, the packet classification engine 104 of FIG. 3. The key builder 152 preferably also receives extracted header data 158 from a packet buffer, such as, for example, the packet buffer 102 of FIG. 3. More particularly, the key builder preferably retrieves extracted header data stored in a header data cache included in the packet buffer.

The key builder 152 preferably contains one or more schema programs. The schema programs preferably are loaded into the key builder 152 using an input signal 160. The schema programs preferably are used to identify key data and key control data for inbound packets. The key builder 152 preferably uses the classification information, the extracted header data and the schema programs to build one or more search keys to compare against entry keys associated with application data contained in the lookup table 154.

The association information between the application data and the entry keys preferably are contained in the lookup table 154 in the form of one or more schema tables. A key control may also be used during the selection of the application data. The key control, such as, for example, IP subnet mask, preferably affects how the search keys from the key builder are compared to the entry keys in the schema tables. The key controls, when used, preferably are provided together with the search keys 162.

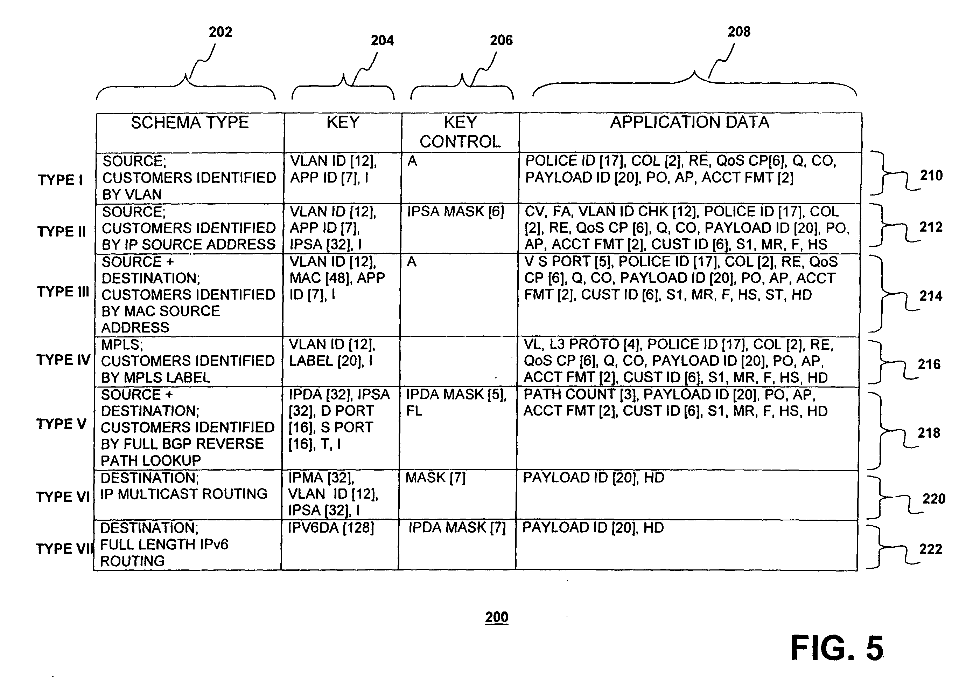

FIG. 5 is a schema table 200 in the lookup table 154 in one embodiment of the present invention. The schema table 200, which may also be referred to as a search table, preferably includes various different types of schemata. The column 202 illustrates various different schema types. It is to be noted that the column 202 is shown for illustrative purposes only, and may not be a part of an actual schema table. The schema table 200 illustrates seven schema types, each type being represented by a row in the table. Thus, Types I through VII correspond, respectively, with the rows 210, 212, 214, 216, 218, 220 and 222. In addition, entry keys, key controls and application data correspond, respectively, with the columns 204, 206 and 208. In other embodiments, the schema tables may contain entry keys, key controls and application data associated with more or less than seven schema types.

The schema Type I 210 preferably is a type in which source information is used for searching. The entry key in Type I includes Virtual Local Area Network (VLAN) ID, application ID (APP ID), and an invalid bit (I). The VLAN ID is the source VLAN for the packet, e.g., frame, being considered, and preferably allows for identification of the customer. The APP ID preferably allows for awareness of the application being run per customer. In practice, the APP ID may be identified in a packet buffer, such as, for example, the packet buffer 102 of FIG. 3. In one embodiment of the present invention, the APP ID is a 7-bit index, which has been mapped from 1024 TDP/UDP ports. For example, the APP ID may identify Hyper Text Transfer Protocol(HTTP) application. In other embodiments, the APP ID may have more or less than seven bits, and/or may be identified in a different manner. The invalid bit, when set, preferably indicates entries that are in the process of being deleted from the schema table.

The key control A of the schema Type I preferably is a control bit that preferably enables masking out of the APP ID field from the entry key. The key control A preferably is not supplied by the key builder as a part of the search key. The key control A preferably is used during the search process when comparing the search key to the entry key. If the key control A is the same as the VLAN default data, the masking of the APP ID field may not be used. The setting of the key control A preferably results in the search process ignoring the APP ID field for the entry being looked up. This way, the key control A preferably allows VLAN with unknown applications to be expressed.

For example, suppose VLAN 6 is the source of packets, and packets from VLAN 6 need treatment X. This would be expressed in the schema table as an entry, {Key = (VLAN=6, APP ID=0), Control = (A=1), Data = X}. The setting of the control bit A (i.e., A=1) in this case indicates that the APP ID is to be ignored. Therefore, in this situation, any search key presented to the search process with VLAN=6 and any APP ID preferably matches this entry.

For another example, suppose HTTP packets from VLAN 6 require different treatment, treatment Y. This would then be expressed in the schema table as an entry, {Key = (VLAN=6, APP ID=HTTP), Control = (A=0), Data = Y}. Since A is not set (i.e., A=0) in this case, the APP ID is valid for this entry. Therefore, in this situation, only HTTP packets preferably are matched by this entry.

In one embodiment of the present invention, the schema table preferably is implemented in such a way that the best matching entry (i.e., the entry in the table with most fields matching) is selected. For example, in case of the above two examples, when a search key having VLAN=6 and APP ID=HTTP is provided, the entry indicating Y treatment preferably is selected over the entry indicating X treatment.

The Type I application data preferably includes POLICE ID field, Color enable (COL) field, remark enable control (RE) bit, QoS Code Point (CP) field, QoS enable (Q) bit, color control (CO) bit, PAYLOAD ID field, Payload Control (PO) bit, Application Police enable (AP) bit and Accounting Format identifier (ACCT FMT) field. Number of bits in the application data fields of all schema types (Types I through VII) in one embodiment of the present invention, for example, Police ID [17] and QoS CP [6], are indicated in the schema table 200. It should be noted that the number of bits used to represent the application data fields may be different in other embodiments.

The PAYLOAD ID preferably overrides the destination search payload when the PO bit is set. Thus, the PAYLOAD ID preferably allows traffic, e.g., flows or packets, from a particular source or from a particular source and application to be directed to the destination indicated by the PAYLOAD ID rather than as indicated by the destination address (DA).

When the AP bit is set, a police ID preferably is derived from the APP ID. When available, a Customer ID (CUST ID) may also be used during the derivation of the police ID. The derivation of the police ID using the APP ID and the CUST ID preferably allows bandwidth policing on a per-customer, per-application basis. The ACCT FMT preferably indicates a particular type of accounting to be used for a particular customer. The ACCT FMT, for example, may be used together with the APP ID and/or the CUST ID to determine a type of accounting to be used. The POLICE ID preferably allows policing and/or accounting of a particular entry separate from that provided by policing based on the APP ID and CUST ID fields as indicated by the AP and ACCT FMT fields.

The COL field preferably enables override of the QoS color (discard eligibility) value as determined by the flow resolution logic. The CO bit preferably enables the use of the COL field. When enabled, the COL field preferably enables the discard eligibility for customer and/or application to be specified.

The QoS CP field preferably enables the override of the QoS Code Point as determined by the flow resolution logic. This feature preferably is enabled when the Q bit is set. For Differentiated Services (DiffServ) applications, the QoS CP field, together with the COL field, preferably allows customer application to have a specific DiffServ codepoint. For non-QoS traffic, this feature may allow customer application traffic to be assigned to a particular queue. The RE bit preferably is used in DiffServ applications to indicate that the DiffServ codepoint should be remarked in the packet. The RE bit may be used with other QoS fields to apply a specific classification to a packet, e.g., a frame.

The schema Type II 212 preferably is a type in which source information is used for searching. The entry key in Type II includes Virtual Local Area Network (VLAN) ID, application ID (APP ID), Internet Protocol Source Address (IPSA) and an invalid bit (I). The entry key in type II preferably is used to express customers identified by IPSA. Therefore, in schema Type II, customers preferably are identified by IPSA. The VLAN ID is the source VLAN for the packet, e.g., frame, being considered. The APP ID preferably allows for awareness of the application being run per customer. The invalid bit (I) preferably indicates entries in the schema table that are in the process of being deleted.

The schema Type II preferably includes IPSA Mask [6] for key control. In other embodiments, the IPSA Mask may have more or less than six bits. The IPSA Mask may include a subnet mask used to express Classless Inter-Domain Routing (CIDR) networks.

The Type II application data preferably includes check verify (CV) bit, forward action (FA) field, VLAN ID CHK field, POLICE ID field, Color enable (COL) field, remark enable control (RE) bit, QoS Code Point (CP) field, QoS enable (Q) bit, color control (CO) bit, PAYLOAD ID field, Payload Control (PO) bit, Application Police enable (AP) bit, Accounting Format identifier (ACCT FMT) field, customer identification (CUST ID) field, Sniff (S1) bit, management resource (MR) bit, filter control (F) bit and search-hit (HS) bit. The POLICE ID field, COL field, RE bit, QoS CP field, Q bit, CO bit, PAYLOAD ID field, PO bit, AP bit and ACCT FMT field preferably are similar to the corresponding fields and bits in the Type I application data.

If the Type II search key does not match the entry keys, the packet may be dropped or it may be forwarded with learn event generated, based on a per-port control. During the learn event, the source address of the packet preferably is added to an address table associated with the application engine. In other embodiments, the VLAN ID field preferably is set to zero for the search, and when found, the resultant VLAN ID CHK field preferably is compared with the VLAN ID of the source. If there is a mismatch in the comparison, the action indicated by the FA field preferably is performed. The FA actions may include, but is not limited to, one or more of drop, forward and send to management resource (EMM).

The CUST ID field preferably is used with the APP ID in the key to derive a police ID, which may be used for bandwidth policing on a per-customer, per-application basis. The S1 bit, when set, preferably allows sniffing of traffic from a certain customer or from a customer/application pair. The MR bit preferably indicates that the traffic, e.g., packets or flows, of this type should be sent to EMM. The F bit preferably indicates that the traffic of this type should be discarded. The HS bit, the search hit-bit for the entry, preferably is set by the search engine. The HS bit preferably is used to indicate that the entry has been found during a search operation so that, for example, when selecting entries to age-out (e.g., to reclaim table space), used entries preferably are kept and unused entries preferably are deleted.

The schema Type III 214 preferably is a type in which both source information and destination information may be used for searching. The entry key in Type III includes VLAN ID, MAC Address (MAC), APP IP and an invalid bit (I). Using schema Type III, customers preferably are identified by MAC source address. The source search preferably provides source MAC learning and customer identification. Further, the destination search preferably provides Layer 2 Bridging. Similar to the schema Type I, the schema Type III includes the key control A for preferably enabling masking out of the APP ID field in the key. Thus, A control bit preferably allows masking out of the APP ID for unknown applications.

For source lookups, the schema Type III preferably identifies customers based on their VLAN ID, MAC Address and APP ID. The VLAN ID preferably represents the source VLAN for the packet, e.g., frame, MAC preferably represents the source MAC Address, and APP ID preferably represents the application ID. When used in a destination search, the APP ID preferably is set to zero. Then, the PAYLOAD ID of the result preferably indicates the forwarding vector to use.

The Type III application data preferably includes Virtual Source Port Number (V S PORT) field, POLICE ID field, COL field, RE bit, QoS CP field, Q bit, CO bit, PAYLOAD ID field, PO bit, AP bit, ACCT FMT field, CUST ID field, S1 bit, MR bit, F bit, HS bit, ST bit and HD bit. The POLICE ID field, COL field, RE bit, QoS CP field, Q bit, CO bit, PAYLOAD ID field, PO bit, AP bit, ACCT FMT field, CUST ID field, S1 bit, MR bit, F bit and HS bit preferably are similar to the corresponding fields and bits in the Type I and Type II application data. The VS PORT field preferably represents a virtual source port on the flow resolution logic in one embodiment of the present invention. On a successful source lookup, the VS PORT field preferably is compared against the ingress port's virtual source port number, which is used for learning.

The schema Type IV 216 preferably is a type in which customers preferably are identified from multi protocol label switching (MPLS). The PAYLOAD ID in the application data preferably is used for label switching. The entry key in Type IV includes VLAN ID, LABEL and an invalid bit (I). The VLAN ID preferably represents source VLAN for the packet, e.g., frame. The LABEL field preferably includes the first MPLS label. The invalid bit (I) preferably is used to indicate entries of the schema table in the process of being removed. In this embodiment, key control field is not used with the schema Type IV. In other embodiments, one or more key control fields may be used.

The Type IV application data preferably includes Valid Label (VL) field, L3 Protocol (L3 PROTO) field, POLICE ID field, COL field, RE bit, QoS CP field, Q bit, CO bit, PAYLOAD ID field, PO bit, AP bit, ACCT FMT field, CUST ID field, S1 bit, MR bit, F bit, HS bit, and HD bit. The POLICE ID field, COL field, RE bit, QoS CP field, Q bit, CO. bit, PAYLOAD ID field, PO bit, AP bit, ACCT FMT field, CUST ID field, S1 bit, MR bit, F bit, HS bit and HD bit preferably are similar to the corresponding fields and bits in the Type I, Type II and Type III application data.

The VL field may be used to indicate that the label is dead and should be popped. In this case, the next search preferably is done on the following label and/or the packet may be sent to the EMM. The L3 PROTO field preferably indicates to the egress edge Label Switching Router (LSR) on what protocol is present on top of the MPLS stack. This information may be used to route the packet, e.g., frame, after the last label popping. The egress edge LSER preferably is the termination LSR of a tunnel. MPLS packets preferably flow through a tunnel until they get to an egress edge LSR. The egress edge LSR preferably removes the final label and handles the resulting packet according to the underlying packet type (e.g., normal IP packet).

The schema Type V 218 preferably is a type in which customers preferably are identified using both source information and destination information. More particularly, customers preferably are identified by full Border Gateway Protocol (BGP) reverse path lookup.

The entry key in schema Type V preferably includes Internet Protocol Destination Address (IPDA), Internet Protocol Source Address (IPSA), Destination Port (D PORT), Source Port (S PORT), TCP flag (T) bit and invalid (I) bit. In source search mode, IPDA preferably is used as a Source IP Address field and the other key fields in the search key preferably are set to zero. In destination search mode, IPDA preferably is used as the IP Destination Address and the IPSA preferably is used as the IP Source Address.

The D PORT preferably is used as the Transfer Control Protocol (TCP)/User Datagram Protocol (UDP) destination port number and the S PORT preferably is used as the TCP/UDP source port number. The T bit preferably is set when the TCP protocol is being used on top of IP, and preferably is cleared otherwise. The I bit preferably is used to indicate invalid condition as in other schema types.

In the key control fields, the schema Type V includes IPDA MASK field and FL bit. Thus, searches preferably are controlled by the IPDA MASK used to set the IPDA subnet size and FL bit, which may be used, when set, to mask out the entire IPSA + D PORT + S PORT + T flow spec portion of the entry.

The Type V application data preferably includes PATH COUNT field, PAYLOAD ID field, PO bit, AP bit, ACCT FMT field, CUST ID field, S1 bit, MR bit, F bit, HS bit, and HD bit. The PAYLOAD ID field, PO bit, AP bit, ACCT FMT field, CUST ID field, S1 bit, MR bit, F bit, HS bit and HD bit preferably are similar to the corresponding fields and bits in application data for other schema types. The PATH COUNT field preferably represents the number of paths available for the route. The resultant PAYLOAD ID preferably acts as a base payload to which the IPSA/IPDA hash may be added modulo PATH COUNT.

The schema Type VI 220 preferably is a type in which destination search is used to provide IP multicast routing. The entry key in schema Type VI preferably includes IP Multicast Destination Address (IPMA), VLAN ID, IPSA and inhibit bit (I). The schema Type VI preferably is used for IP multicast destination searching. The VLAN ID preferably represents source VLAN for the packet, e.g., frame. The schema Type VI preferably has MASK in the key control field. The MASK field preferably allows specification of the IPSA subnet and may also mask out the VLAN ID field. The Type VI application data preferably includes PAYLOAD field and HD bit, which are similar to corresponding field and bit in other schema types described above.

The schema Type VII 222 preferably is a type in which destination search is used to provide full length Internet Protocol Version 6 (Ipv6) routing. The entry key in schema Type VII preferably includes IPv6 Destination Address (Ipv6 DA), which is a destination address for IPv6 routing. The schema Type VII preferably has IPDA MASK in the key control field. The IPDA MASK preferably is a full width mask. Thus, for example, the IPDA MASK (7-bit mask) may be able to mask for full Ipv6 CIDR support. The Type VII application data preferably includes PAYLOAD field and HD bit, which may be similar to corresponding field and bit in other schema types described above. Up to 128 different next-hops may be established from the 7-bit payload ID.

FIG. 4 is a flow diagram of identifying and providing application data for a packet in one embodiment of the present invention. In step, 250, schema programs are loaded into an application engine, such as, for example, the application engine 150 of FIG. 2. In steps 252 and 254, respectively, the application engine preferably receives classification information and header data, respectively, of the packet.

The schema programs preferably uses the classification information and the header data of the packet to generate one or more keys and key control signals in step 256. For example, the schema programs preferably selects the schema to be applied to the packet based on the classification information and/or the header data of the packet. The keys generated by the schema programs may also be referred to as search keys, since these keys preferably are used to look up or search application data for the packet in a schema table in step 258.

The schema table preferably is included in a lookup table, such as, for example, the lookup table 154 of FIG. 2. The schema table preferably includes application data for one or more different schema types, as illustrated, for example, as TYPE I through TYPE VII in the schema table 200 of FIG. 3. In step 260, the application engine preferably provides the identified application data. The application data preferably is provided to an edit module, which may reside within a packet buffer, such as, for example, the packet buffer 102 of FIG. 1. The edit module preferably edits the packet using the application data prior to transmitting the packet as an outbound packet.

Although this invention has been described in certain specific embodiments, many additional modifications and variations would be apparent to those skilled in the art. It is therefore to be understood that this invention may be practiced otherwise than as specifically described. Thus, the present embodiments of the invention should be considered in all respects as illustrative and not restrictive, the scope of the invention to be determined by the appended claims and their equivalents.

## Claims

1. A packet processing element for processing a packet, the packet processing element having a plurality of schemata programmed thereon, wherein classification information for the packet is used to select at least one schema, and wherein the selected schema is used to produce application data for the packet.

2. The packet processing element according to claim 1 wherein at least one schema includes one or more key portions and one or more application data portions, and the classification information for the packet is applied to at least one key portion of a schema to produce application data for the packet from at least one application data portion of the schema.

3. The packet processing element according to claim 2 wherein the key portions include at least one data selected from group consisting of source data and destination data.

4. The packet processing element according to claim 2 wherein the application data portions include at least one data selected from group consisting of accounting data, policing data and routing data.

5. The packet processing element according to claim 2 wherein the classification information includes one or more classification data portions, and wherein the classification data portions are compared against the key portions to select at least one schema for the packet.

6. The packet processing element according to claim 1 wherein at least one schema includes one or more key portions, one or more key control portions and one or more application data portions, wherein the classification information for the packet is applied to at least one key portion of a schema in conjunction with at least one key control portion of the schema to produce application data for the packet from at least one application data portion of the schema.

7. The packet processing element according to claim 1 wherein the plurality of schemata include a MAC bridging schema.

8. The packet processing element according to claim 1 wherein the plurality of schemata include an IP routing schema.

9. The packet processing element according to claim 1 wherein the plurality of schemata include an MPLS schema.

10. A method of producing application data for a packet using a packet processing element having a plurality of schemata programmed thereon, the method comprising the steps of:
selecting at least one schema using classification information for the packet; and
producing the application data for the packet using the selected schema.

11. The method of producing application data according to claim 10 wherein at least one schema includes one or more key portions and one or more application data portions, wherein the step of producing the application data comprises the step of applying the classification information for the packet to at least one key portion of schema to produce application data for the packet from at least one application data portion of the schema.

12. The method of producing application data according to claim 11 wherein the key portions include at least one data selected from group consisting of source data and destination data.

13. The method of producing application data according to claim 11 wherein the application data portions include at least one data selected from group consisting of accounting data, policing data and routing data.

14. The method of producing application data according to claim 11 wherein the classification information includes one or more classification data portions, and wherein the step of applying the classification information comprises the step of comparing the classification data portions against the key portions to select at least one schema for the packet.

15. The method of producing application data according to claim 10 wherein at least one schema includes one or more key portions, one or more key control portions and one or more application data portions, wherein the step of producing the application data comprises the step of applying the classification information for the packet to at least one key portion of a schema in conjunction with at least one key control portion of the schema to produce application data for the packet from at least one application data portion of the schema.

16. The method of producing application data according to claim 10 wherein the plurality of schemata include a MAC bridging schema.

17. The method of producing application data according to claim 10 wherein the plurality of schemata include an IP routing schema.

18. The method of producing application data according to claim 10 wherein the plurality of schemata include an MPLS schema.

19. A packet switching controller comprising a processing engine, the processing engine comprising:
an element for building a key using classification information for a packet; and
a lookup table containing one or more schemata;
wherein the key is used to select one of the schemata for the packet, and the selected schema provides application data for the packet.

20. The packet switching controller of claim 19 wherein at least one schema includes a key portion and an application data portion, and the key is compared against the key portion to lookup the application data portion.

21. The packet switching controller of claim 19 wherein the key portion includes at least one data selected from group consisting of source data and destination -data, and the application data portion includes at least one data selected from group consisting of accounting data, policing data and routing data.

22. The packet switching controller of claim 20 wherein at least one schema includes a key control portion, and the key control portion is used in conjunction with the key to lookup the application data portion.

23. The packet switching controller of claim 19 wherein the schemata include at least one schema selected from group consisting of a macro access control (MAC) bridging schema, an Internet Protocol (IP) routing schema and a multi-protocol label switching (MPLS) schema.

24. A method of producing application data for a packet, the method comprising the steps of:
building a key using classification information for the packet;
selecting a schema for the packet from a lookup table containing one or more schemata; and
reading the application data from the selected schema.

25. The method of producing application data of claim 24 wherein at least one schema includes a key portion and an application data portion, and the key is compared against the key portion to lookup the application data portion.

26. The method of producing application data of claim 25 wherein the key portion includes at least one data selected from group consisting of source data and destination data, and the application data portion includes at least one data selected from group consisting of accounting data, policing data and routing data.

27. The method of producing application data of claim 25 wherein at least one schema includes a key control portion, and the key control portion is used in conjunction with the key to lookup the application data portion.

28. The method of producing application data of claim 24 wherein the schemata include at least one schema selected from group consisting of a macro access control (MAC) bridging schema, an Internet Protocol (IP) routing schema and a multi-protocol label switching (MPLS) schema.

29. A data communication switch having a backplane and a plurality of packet switching controllers interconnected over the backplane, at least one packet switching controller comprising:
an application engine having a plurality of schemata programmed thereon, wherein classification information for the packet is used to select at least one schema, and wherein the selected schema is used to produce application data for the packet.

30. The data communication switch of claim 29 wherein at least one schema includes one or more key portions and one or more application data portions, and the classification information for the packet is applied to at least one key portion of a schema to produce application data for the packet from at least one application data portion of the schema.
